# EUROPEAN PATENT SPECIFICATION

(11) **EP 2 023 683 B1**
(45) Date of publication and mention of the grant of the patent: **18.05.2011**
(21) Application number: 07015719.3
(22) Date of filing: 09.08.2007
(51) Int. Cl.: H04W 74/08

(54) **Mobile communication terminal, communication station, communication network, and communication method**
Mobiles Kommunikationsendgerät, Kommunikationsstation, Kommunikationsnetzwerk und Kommunikationsverfahren
Terminal de communication mobile, système de communication, réseau de communication et procédé de communication

(43) Date of publication of application: 11.02.2009
(73) Proprietor: Nokia Siemens Networks Oy, 02610 Espoo (FI)
(72) Inventor: Pirskanen, Juho, 33580 Tampere (FI); Wimmer, Markus, 55-093 Kielczow (PL)
(74) Representative: Bruglachner, Thomas E.

(56) References cited:
- US-A1- 2005 266 846

## Description

### Field of invention

The present invention relates to the field of mobile communication terminals. Furthermore, the invention relates to communication stations. Moreover, the invention relates to communication networks. Beyond this, the invention relates to communication methods.

### Art Background

Universal Mobile Telecommunications System (UMTS) is one of the third-generation (3G) mobile phone technologies. UMTS is a broadband, packet-based transmission of text, digitized voice, video, and multimedia at high data rates, offering a set of services to mobile computer and phone users no matter where they are located in the world.

Document US 2005/0266846 A1 discloses a method and apparatus for providing new configurations for transmitting control information between a mobile terminal and a network using a common control channel (CCCH) logical channel/transport channel.

### Summary of the Invention

There may be a need for a communication system providing a proper performance.

This need may be met by a mobile communication terminal, by a communication station, by a communication network, and by a communication method according to the independent claims. Further embodiments of the present invention are described by the dependent claims.

According to an exemplary embodiment, a mobile communication terminal (such as a cellular phone) adapted to be communicatively (for instance in a wireless manner) coupled to a communication station (such as a base station) of a communication network (such as an UMTS network) is provided, the mobile communication terminal comprising a station communication unit (such as an antenna) adapted for exchanging communication messages with the communication station, and a communication message generation unit (which may have processing capabilities) adapted for generating a Common Control Channel information comprising message for transmission to the communication station by the station communication unit, wherein the communication message generation unit is adapted for rearranging the Common Control Channel message (for instance in one or a plurality of Transmission Time Intervals, TTI) in accordance with a property (for instance a size, a type, a transmission protocol, a time duration, a priority, etc.) of the Common Control Channel information comprising message before transmission to the communication station.

According to another exemplary embodiment, a communication station (such as a base station, for instance a node B) is provided which is adapted to be communicatively coupled (for instance for a wireless communication) to a mobile communication terminal of a communication network, wherein the communication station comprises a terminal communication unit (such as an antenna) adapted for exchanging communication messages with the mobile communication terminal, and a communication message evaluation unit (which may have processing capabilities) adapted for evaluating a Common Control Channel information comprising message received from the mobile communication terminal and being rearranged (for instance in one or a plurality of Transmission Time Intervals) in accordance with a property of the Common Control Channel information comprising message.

According to still another exemplary embodiment, a communication network (for instance a radio network, particularly a UMTS network) is provided, the communication network comprising a mobile communication terminal having the above mentioned features and a communication station having the above mentioned features, wherein the mobile communication terminal is communicatively coupled to the communication station.

According to yet another exemplary embodiment, a method of communicating in a communication network is provided, the communication method comprising communicatively coupling a mobile communication terminal to a communication station, generating, by the mobile communication terminal, a Common Control Channel information comprising message for transmission to the communication station, rearranging, by the mobile communication terminal, the Common Control Channel information comprising message (for instance in one or a plurality of Transmission Time Intervals) in accordance with a property of the Common Control Channel information comprising message before transmission to the communication station, and evaluating, by the communication station, the rearranged Common Control Channel information comprising message received from the mobile communication terminal.

According to still another exemplary embodiment of the invention, a program element (for instance a software routine, in source code or in executable code) is provided, which, when being executed by a processor, is adapted to control or carry out at least a part of a communication method having the above mentioned features.

According to yet another exemplary embodiment of the invention, a computer-readable medium (for instance a CD, a USB stick, a floppy disk or a harddisk) is provided, in which a computer program is stored which, when being executed by a processor, is adapted to control or carry out at least a part of a communication method having the above mentioned features.

Data processing for communication purposes which may be performed according to embodiments of the invention can be realized by a computer program, that is by software, or by using one or more special electronic optimization circuits, that is in hardware, or in hybrid form, that is by means of software components and hardware components.

In the context of this application, the term "mobile communication terminal" may particularly denote any user equipment, particularly portable communication device. This term may particularly include mobile phones, personal digital assistants (PDAs), navigation systems, etc.

The term "communication station" may particularly denote any base station of a radio network. It may be coupled with one or a plurality of mobile communication terminals. Such a communication station may particularly be a base station (BS) in the context of UMTS (Universal Mobile Telecommunication Systems). Such a base station may be a central radio transmitter/receiver that may maintain communication with mobile radio telephones within a given range. The communication station may be installed at a fixed or stationary position.

The term "communication unit" may particularly denote a transmitter, a receiver or a transmitter/receiver (transceiver) which allows for a unidirectional or bidirectional exchange of communication messages with a communication partner. Such a communication unit may particularly be a wireless communication unit, i.e. a communication system which communicates without the necessity of wires. However, wire-based communication is also covered by embodiments of the invention.

The term "Common Control Channel information comprising message" may particularly denote a message comprising information which may be usually included in a Common Control Channel (CCCH) message, as defined below. Particularly, the Common Control Channel information comprising message may be a Common Control Channel (CCCH) message itself. Alternatively, the Common Control Channel information comprising message may be a Protocol Data Unit (PDA), more particularly a Radio Link Control Protocol Data Unit (RLC PDU), which may also include information which is typically included in a CCCH message. In specific embodiments, the CCCH information comprising message may be TM RLC PDU. The content of a CCCH message are its information elements.

The term "Common Control Channel message" may particularly denote a control channel for a network such as a GSM network for use for initializing a communicative connection. Such a system, which may be implemented particularly in UMTS, may denote channels via which a mobile station or mobile communication terminal can be supplied with data/information regarding the network. Particularly, a mobile communication terminal may request allocation of a signalling channel via a CCCH channel. CCCH may support common procedures required to establish a dedicated link with the network and may include the RACH, FACH (Forward Access Channel) and PCH (paging channel).

The term "Transmission Time Interval" (TTI) may particularly denote an inter-arrival time of a Transport Block Set (TBS), and may be equal to the periodicity at which a Transport Block Set may be transferred by a physical layer on a radio interface. A TTI may be a multiple of a minimum interleaving period (for instance 10 ms, which may be the length of one radio frame). A MAC (Medium Access Control) may deliver one transport block set to the physical layer every TTI.

The term "rearranging" may particularly denote a change of the structure of the CCCH message. This may include a change in the order of components/blocks/segments of the message, a deletion of a portion of a message, extending a message by including additional information, assembling portions of the message to a larger message, etc. The term "rearranging" may include the concept of segmentation in transport.

According to an exemplary embodiment of the invention, a communication scheme for communicating between a mobile communication terminal such as a cellular phone and a communication station such as a base station is provided, wherein the flexibility in designing a Common Control Channel information comprising message is increased by allowing a rearrangement of such a Common Control Channel message in dependence of the characteristics of the Common Control Channel information comprising message. For example, when the Common Control Channel message exceeds a predetermined threshold size/dimension, the rearrangement may be performed by splitting the Common Control Channel message into multiple portions, even involving multiple Transmission Time Intervals. Taking this measure may enable the transmission of Common Control Channel messages without or with relaxed restrictions regarding message size, and therefore content of such a message.

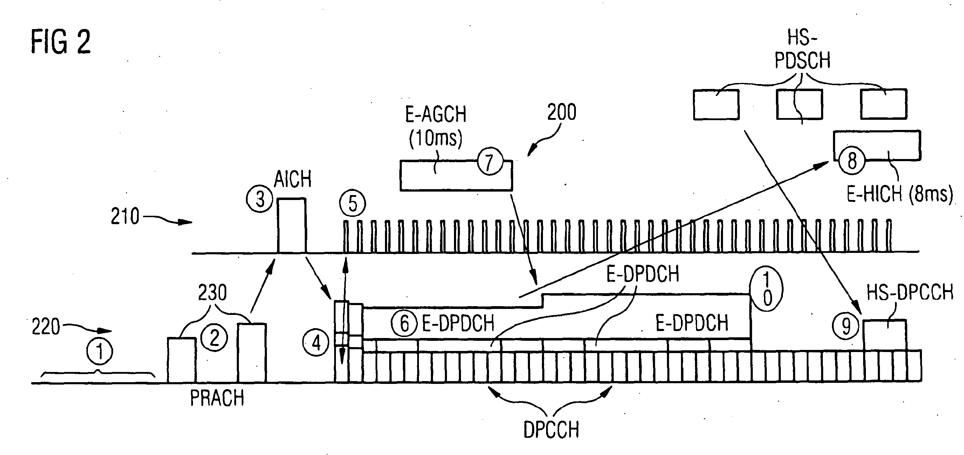

According to an exemplary embodiment of the invention, a CCCH operation in HS-RACH may be enabled. In step 6 of the communication scheme illustrated in Fig. 2, CCCH data can be sent. According to an exemplary embodiments of the invention, specific mechanisms for restructuring and segmentation of CCCH messages in HS-RACH procedure are provided. Such a restructuring and segmentation may enable the transmission of CCCH without message property restrictions in multiple TTIs.

More particularly, in WCDMA REL99 to REL7, following three CCCH messages are sent uplink:
- RRC CONNECTION REQUEST
- CELL UPDATE
- URA UPDATE

According to an exemplary embodiment of the invention, the size of these messages is no more limited, so that they can be transmitted in a single TTI or in multiple TTIs. The segmentation of a CCCH message (that is one RLC SDU) in multiple RLC PDUs at the UE side and the combining of RLC PDUs to a single RLC SDU at the UTRAN side may be made possible. Different UEs can send RLC PDUs with the help of the RACH procedure at the same time, and for CCCH messages, an UE identifier may be included in MAC level. Therefore, UTRAN may be able to determine which PDUs should be combined together.

According to an exemplary embodiment of the invention, a WCDMA system may be provided which does not prohibit sending large CCCH messages in multiple RACH TTIs in the UL, which relaxes limitations of the above mentioned messages. If this limitation does not exist, then larger CCCH messages can be sent in uplink direction, which can be for instance exploited to reduce the call setup delay by sending the RRC CONNECTION REQUEST and INITIAL DIRECT TRANSFER concatenated or their IEs combined in a single message. Additionally the CCCH message can include more uplink measurement results which are currently limited by the available message size.

Particularly if HS-RACH is used, UL CCCH message segmentation may be enabled at the UM RLC entity instead of TM mode, or the segmentation is included at the MAC-e/es entity. The MAC-e/es entity may be used for restructuring.

In the following, further exemplary embodiments of the mobile communication terminal will be explained. However, these embodiments also apply to the communication station, to the communication network and to the method.

The communication message generation unit may be adapted for rearranging the Common Control Channel information comprising message in one or a plurality of Transmission Time Intervals (TTI) in accordance with a size of the Common Control Channel information comprising message. Particularly, a threshold data size of a Common Control Channel information comprising message may be defined. Even when such a threshold is exceeded, a transmission of the included data is possible, since the rearrangement may include the segmentation of the Common Control Channel information comprising message into a plurality of sub-portions, involving multiple Transmission Time Intervals, having a number in accordance with the required data size.

Particularly, the communication message generation unit may segment the Common Control Channel information comprising message into a plurality of sub-messages which can be encoded in a plurality of Transmission Time Intervals. Such a segmentation may include a splitting of a data packet in a manner that it can be reassembled in accordance with a derivable scheme.

The communication message generation unit may be adapted for rearranging the Common Control Channel information comprising message in accordance with a granted uplink (UL) resource per Transmission Time Interval. Thus, even when a granted uplink (UL) resource per Transmission Time Interval varies (for instance is increased in future technology generations), the system may flexibly adapt its function in accordance with the changes.

The Common Control Channel message to be rearranged may be a Radio Resource Control Connection Request (RRC Connection Request) message. This may denote a procedure when a UE is in an idle mode and requests signalling connections. In this context, the UE may send an RRC Connection Request to the network. After receipt of an RRC Connection Setup message from the network, the UE may verify the UE identity. It may assume the state assigned by the network and may send a Connection Setup Complete message back.

It is also possible that the Common Control Channel message to be processed is a Cell Update message. Cell Update may be used by an UE to inform an UTRAN that the UE has switched to a new cell. It may be a forward handover procedure. Such a procedure may be triggered after change of the cell and after the UE has read information transmitted by an UTRAN.

Furthermore, it is possible that the Common Control Channel message is an URA Update (UTRAN Registration Area Update) message. An UTRAN Registration Area (URA) may be denoted as an area covered by a number of cells, wherein an URA may be configured in UTRAN and may be broadcasted in relevant cells. An URA Update message may be used by an UE to inform the UTRAN that the UE has switched to a new URA. It may be triggered after change of a cell, or after an UE has read information broadcasted by an UTRAN indicating a change of URA.

Several cases may be distinguished:
a) a CCCH message can be formed consisting of a RRC Connection Request message and an Initial Direct Transfer message, or
b) a CCCH message can be formed consisting of a RRC Connection Request message, and RRC Connection Setup Complete and an Initial Direct Transfer message.

A Medium Access Control (MAC) entity may be provided for transporting the Common Control Channel information comprising message. Medium Access Control may denote a lower one of two sub-layers in a Data Link Layer. MAC may handle access to a shared medium and may be employed in the context of UMTS.

The mobile communication terminal may be adapted as a user equipment, particularly as a mobile phone. A mobile phone may be denoted as a device which behaves as a normal telephone while being able to move over a wide area. Mobile phones may allow connections to be made to the telephone network, normally bidirectionally dialling the other party's number on an in-built keypad. A mobile phone may also be denoted as a cellular telephone or a handheld mobile radio telephone for use in an area divided into sections, each with its own short range transmitter/receiver.

The mobile communication terminal and/or the communication station may be adapted for a communication in accordance with UMTS, particularly with UTRAN (UMTS Terrestrial Radio Access Network). UTRAN may be denoted as a hierarchical network of several radio network subsystems (RMS), which may be interconnected to one another and with a core network.

In the following, further exemplary embodiments of the communication station will be explained. However, these embodiments also apply to the mobile communication terminal, to the communication network and to the method.

The communication message evaluation unit may further be adapted for evaluating the received Common Control Channel information comprising message by restructuring content of the received Common Control Channel message. This restructuring may be inverse to the restructuring at the side of the user equipment, so that the original information may be retrieved at the side of the communication station.

Furthermore, disassembling of content of the Common Control Channel information comprising message may be performed by the communication station. This disassembling may include the separation of different components from a message, and may also include removal of a portion of a message, such as a header.

Beyond this, the communication station may also perform a reassembling of the content of the Common Control Channel information comprising message. Such a function may reassemble segments to complete an interpretable message.

The communication message evaluation unit may comprise a Medium Access Control (MAC) entity for transporting the Common Control Channel information comprising message. The configuration of a Medium Access Control entity at the side of the mobile communication terminal (that is the UE) and at the side of the communication station (that is of the base station) may be coordinated or harmonized, so that the corresponding protocols or schemes are in accordance to one another.

It is possible that the Common Control Channel information comprising message is handled by a single (that is exactly one) Medium Access Control entity. Particularly, one Medium Access Control entity may be provided for all connected user equipments in common.

Alternatively, the Common Control Channel information comprising message may be transported or handled by a selected one of a plurality of preconfigured Medium Access Control entities in the communication station. In other words, a plurality of MAC entities may be provided each of which being capable of handling the message, wherein a presently non-occupied one of the MAC entities may be used at a time for performing a transport task. By taking this measure, a fast and complete performance at the side of the communication station can be ensured even in the scenario in which a lot of traffic occurs, for instance caused by multiple CCCH or other messages.

The communication station may also comprise a resource management unit adapted for queuing and subsequently working off multiple Common Control Channel information comprising messages received from a plurality of mobile communication terminals. In such a scenario, one MAC may be provided which serves several user equipments. In such a scenario, it may happen that several user equipments send a CCCH message at the same time. The management unit manages this data load and determines an order (for instance in accordance with the predetermined priority rule) to work off or process the individual messages.

In the following, the term "CCCH information comprising message" will be discussed in further detail.

According to one embodiment (which relates to the "first" embodiment below), TM RLC may be used for reordering, disassembly and segmentation/concatenation in the MAC-e entity. The TM RLC PDU provided by the TM RLC entity may be identical to the CCCH message.

According to other embodiments (which relate to the "second" and "third" embodiment below), any CCCH message delivered by higher layers to the UM RLC entity may be segmented in the UM RLC entity. UM RLC headers may be added to each segment, and padding may be done to achieve octet alignment. Thus, the UM RLC PDU provided by the UM RLC entity to the lower layers is not an CCCH message in this case, but includes corresponding information.

Therefore, in such embodiments "RLC PDU" (or "RLC PDU carrying CCCH message contents") may be considered as a "Common Control Channel information comprising message".

One exemplary aspect is to allow segmentation of a PDU containing a CCCH message. As segments may be transmitted based on HARQ principles, this can lead to out of order delivery of the segments, requiring a reordering in the UTRAN.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows a communication system according to an exemplary embodiment of the invention.
Fig. 2 schematically shows a High Speed Random Access Channel (HS-RACH) procedure according to an exemplary embodiment of the invention.
Fig. 3 schematically shows an exemplary embodiment of the invention involving CCCH PDU segmentation in MAC-e/es at the UE side.
Fig. 4 schematically shows an exemplary embodiment of the invention involving CCCH PDU restructuring, disassembly and reassembly in a MAC-e entity, Node B side.
Fig. 5 schematically shows an exemplary embodiment of the invention involving multiple pre-configured Iub data transport bearers, MAC-es and RLC entities for CCCH reception.
Fig. 6 schematically shows an exemplary embodiment of the invention involving single pre-configured Iub data bearer for CCCH reception.

### Detailed Description

The illustration in the drawings is schematic. It is noted that in different figures, similar or identical elements are provided with the similar or identical reference signs.

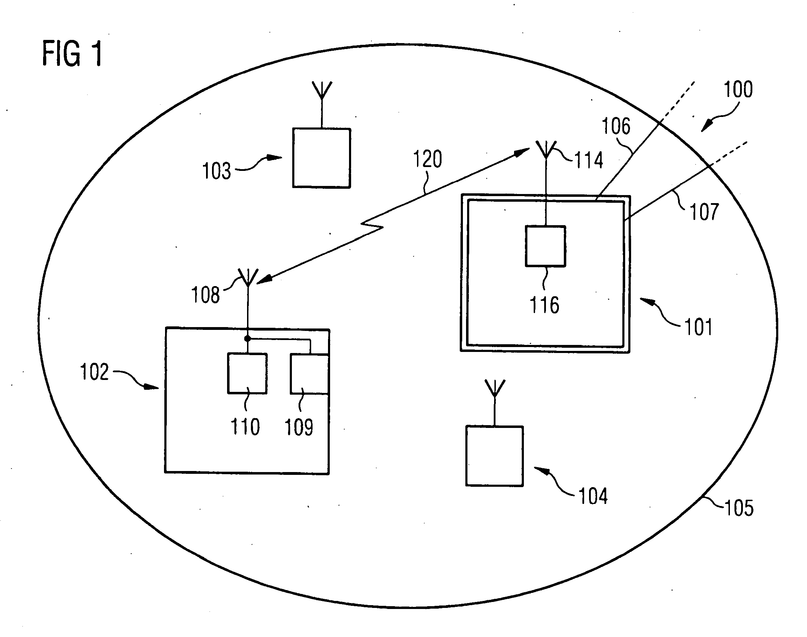

In the following, referring to Fig. 1, a radio network 100 according to an exemplary embodiment of the invention will be explained.

Fig. 1 illustrates the radio network 100 formed by a communication station 101 such as a base station (BS), and by a number of mobile communication terminals 102 to 104.

In the following, a communication scheme between the mobile communication terminal 102 and the communication station 101 will be explained in detail. A communication scheme performed between the communication station 101 and the mobile communication terminals 103, 104 may be performed in a similar manner.

As indicated schematically by reference numerals 106, 107, the communication station 101 may optionally be coupled to a central station and/or to one or more further communication stations by means of communication paths 106, 107, which may be wired, wireless or fibre optical connections.

Furthermore, an operating distance 105 is shown schematically in Fig. 1, i.e. a range within which a communication between the communication station 101 and a plurality of mobile communication terminals 102 to 104 such as mobile phones is enabled with sufficient data transmission quality.

As can be taken from Fig. 1, the mobile communication terminal 102 is adapted to be communicatively coupled to the communication station 101 of the communication network 100 and comprises a station communication unit 108 such as a sending and receiving antenna for bidirectionally exchanging communication messages with the communication station 101. Beyond this, the mobile communication terminal 102 comprises a communication message generation unit 110 which is adapted for generating a Common Control Channel message (CCCH message) for transmission to the communication station 101 by the station communication unit 108. The communication message generation unit 110 is further adapted for, if desired or necessary, rearranging the CCCH message in one or a plurality of Transmission Time Intervals (TTI) in accordance with the size of the CCCH message before transmission of the rearranged CCCH message to the communication station 101.

The communication station 101 is adapted to be communicatively coupled to the mobile communication terminal 102 and also to the mobile communication terminals 103, 104 of the communication network 100. The communication station 101 comprises a terminal communication unit 114 such as a sender and receiver antenna adapted for bidirectionally exchanging communication messages with the mobile communication terminal 102, more particularly with the station communication unit 108 of the mobile communication terminal 102. Moreover, the communication station 101 comprises a communication message evaluation unit 116 which is adapted for evaluating a Common Control Channel message received from the mobile communication terminal 102 and being rearranged in one or a plurality of Transmission Time Intervals in accordance with a property of the Common Control Channel message.

In other words, the mobile communication terminal 102 and the communication station 101 are coordinated in such a manner that a rearrangement performed by the mobile communication terminal 102 can be interpreted by "reverse" processing by the communication station 101.

When the mobile communication terminal 102 prepares a CCCH message for transmission to the communication station 101, it analyzes the size of a corresponding message in view of a maximum or threshold data size. In case that it is recognized by the mobile communication terminal 102 that the maximum allowed size is exceeded, the CCCH message will, before transmission, be rearranged to meet the requirements of the communication scheme or protocol in the network 100. Particularly, the rearrangement may be performed in such a manner that a plurality of Transmission Time Intervals (TTI) are used for the message. However, rearrangement may also include restructuring, segmenting, deletion of unnecessary portions, compression, etc.

Over a communication path 120 within a communication range 105, the rearranged CCCH message is then sent to the communication station 101. At the side of the communication station 101, the rearranged transmitted CCCH message is evaluated, that is particularly processed, etc. in order to extract the data content included therein. This may include procedures such as reassembling, disassembling, restructuring, decompressing, etc.

Moreover, Fig. 1 shows an input/output unit 109 which may also be denoted as a user interface unit. Via such a user interface unit 109, a user may bidirectionally communicate with the mobile communication terminal 102. Thus, the input/output unit 109 may comprise a keypad, buttons, etc., and/or may include a display on which results of a communication may be displayed. The input/output unit 113 may serve, together with further components which are not shown in Fig. 1, to allow to use the mobile communication terminal 102 as a mobile phone or cellular phone.

Particularly in the context of the usage of E-DCH as RACH shared channel and a collision detection for a random access procedure, it may be advantageous to create a base for high speed and high data rate random access, further on called herein "High Speed Random Access Channel" (HS-RACH). It is believed that techniques of HSUPA, such as fast inner loop power control, varying bitrate, Node B scheduling with grants, fast ACK/NACK for DL transmission can be used already in the random access phase.

When the UE sends a CCCH message while using HS-RACH, then following conditions may be fulfilled:
- The UE sends the RRC message RRC Connection Request, Cell Update or URA Update in REL7;
- The UE uses dedicated scrambling code for uplink transmission in HS-RACH. The scrambling code is not used by any other UE simultaneously after contention is solved.
- The MAC-e header contains a field which indicates the logical channel id (identifier) of the transmitted MAC-es PDU(s) .
- In REL7 this has been the DDI field (Data Description Identifier). For HS-RACH, a logical channel id field may be provided.
- The DDI value or logical channel id value for CCCH may be standardized or broadcasted as system information.
- The UE has to wait for a response from UTRAN before it can start sending any other UL data. In other words, when sending the CCCH message, there should only (MAC-es) PDUs in the E-DCH buffer carrying a CCCH message.
- If the Scheduling Indicator (SI) field is included in the MAC-e header, and the total E-DCH buffer (TDBS field in SI) in the UE is reported to be empty, then UTRAN is informed that the complete CCCH message has been transmitted.
- No Soft handover is supported for UL CCCH messages on HS-RACH as in Re199 RACH.

In the following, referring to Fig. 2, a communication scheme 200 according to an exemplary embodiment of the invention will be explained. In the communication scheme 200, a downlink portion 210 is distinguished from an uplink portion 220. A high speed preamble in the uplink portion 220 is denoted with reference numeral 230 in Fig. 2.

The described HS-RACH concept may be decomposed in several steps or phases, which are outlined below and which are indicated as well in Fig. 2:
(1) Determination of UL interference level for open loop power control
(2) Release 99 random access procedure with power ramp-up using specific HS-RACH access slots and/or signatures indicated in SIB
(3) Access Grant and Resource Assignment
(4) Start of inner loop power control in UL, for instance on DPCCH.
(5) Start of inner loop power control in DL, for instance on F-DPCH.
(6) Start of UL data transmission, for instance on E-DPDCH/E-DPCCH
(7) subsequent Resource Assignment (update of existing resource assignment) and Collision detection and resolution
(8) ACK/NACK of UL data (ffs), for instance on E-HICH
(9) ACK/NACK of DL data (ffs) and CQI for link adaptation (ffs), for instance on HS-DPCCH
(10) Mechanisms at end of data transmission, end of HS-RACH resource allocation period, collision detection, etc.

In the following, several possibilities for implementing exemplary embodiments of the invention will be explained.

According to a first embodiment of the invention, restructuring, disassembly and segmentation/concatenation may be performed in the MAC-e entity.

According to such an embodiment, the MAC-e entity in UE and Node B are extended by functions allowing a separate handling of MAC-e and MAC-es PDUs carrying CCCH information.

For CCCH messages, the MAC-e/es entity at the UE side is extended by the following function:
- segmentation: The CCCH message is sent without segmentation from the TM RLC entity in the UE to the MAC-e/es entity of the UE. The segmentation is performed if the received RLC PDU is larger than the maximum allowed length of the MAC-es payload.
- TSN setting: The UE starts the numbering of the TSN from the known (predefined) value for CCCH messages.

The MAC-e entity at the Node B side is extended by following functions:
- reordering/combining: This function reorders received MAC-es PDUs according to the received TSN and Node-B tagging (CFN, subframe number). MAC-es PDUs with consecutive TSNs are delivered to the disassembly function upon reception. As the first TSN value for CCCH message is known the MAC-e reordering can deliver all PDU having consecutive TSN value to the higher layers after receiving the known TSN value.
- disassembly: The disassembly function is responsible for disassembly of MAC-es PDUs. When a MAC-es PDU is disassembled the MAC-es header is removed, the MAC-es payload is extracted and delivered to concatenation function.
- reassembly: Reassembly function reassembles the MAC-es PDUs carrying segments of RLC PDU to complete RLC PDU

According to the first embodiment, the transport of a complete CCCH message is provided by the MAC-e/es entities to the higher layers.

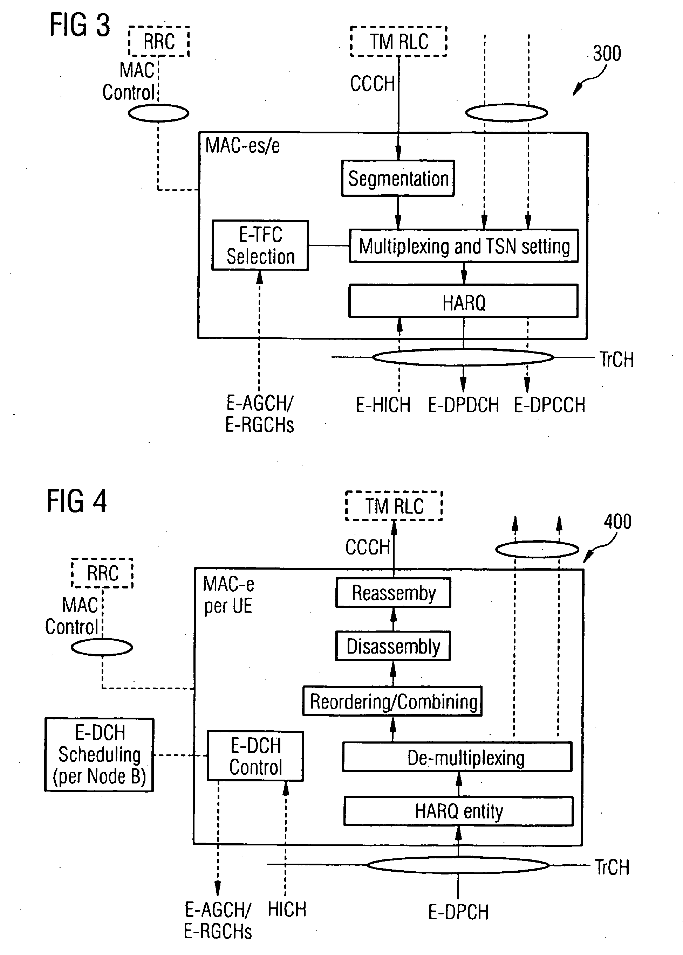

Fig. 3 illustrates a processing scheme 300 in accordance with the first embodiment (at the UE side).

Fig. 4 illustrates another processing scheme 400 in accordance with the first embodiment (at the Node B side).

In the following, a procedural description of this first embodiment will be given.

The transmission of a CCCH messages decomposes in following steps:
- The HS-RACH procedure is started (steps 1 to 5 in Fig. 2) as a CCCH message has to be transmitted. The UL transmission of the CCCH message is part of step 6 as described referring to Fig. 2.
- The transparent RLC entity in the UE delivers the CCCH message without segmentation to the MAC-e/es entity.
- The MAC-e/es entity segments the RLC PDU, if it is larger than the maximum allowed length of the MAC-es payload.
- The multiplexing and TSN setting entity starts the setting of the TSN for first MAC-es/e PDU known value.
- In the next step, the HARQ entity is responsible for storing MAC-e payloads and re-transmitting them.

The next steps continue at the UTRAN side.
- If a MAC-e PDU has been received by the HARQ entity, if forwards it to the De-multiplexing function.
- The de-mulitplexing function forwards the MAC-es PDU(s) to the reordering queue for CCCH. The identification of the reordering flow is done by a MAC-e field which identifies the logical channel (DDI or logical channel id).
- The Reordering function reorders received MAC-es PDUs according to the received TSN and Node-B tagging (CFN, subframe number). If a known value of the TSN is received the MAC-e PDU with consecutive TSN are immediately delivered to disassembly. Otherwise a normal reordering function is performed and with MAC-es PDUs with consecutive TSNs are delivered to the disassembly function upon reception and expiration of reordering timer such as T1.
- The disassembly function removes the MAC-es header and forwards the MAC-es SDUs to the reassembly function.
- The reassembly function combines the MAC-es SDUs. After receiving the complete RLC PDU it delivers it to the higher layers (i.e. it forwards it to the CCCH TM RLC).

When an RLC PDU is transmitted, the TSN of the first MAC-es containing RLC PDU content is set to a known value, for instance zero. With each subsequence MAC-es PDU, the TSN is incremented. When the last part of the RLC PDU is transmitted in a MAC-es PDU, then the Scheduling Information (SI) has to be added, which informs the Node B that the total E-DCH buffer is empty. In other words, the complete RLC PDU has been delivered. If the MAC-es/e PDU(s) carried on this last MAC-es entity are delivered to the reassembly function, the complete RLC PDU is present at the reassembly function and its delivery to the CCCH UL RLC entity is triggered.

According to a second embodiment of the invention, multiple "virtual" CCCH users may be involved, as will be described in the following:
HS-RACH feature aims to allow UEs in CELL_FACH state to have EDCH resources configured, i.e. for each logical channel, an RLC entity and MAC-es reordering queue are configured as well as one or several Iub data transport bearers from the Node B to the MAC-es entity. When running HS-RACH, the Node B grants EDCH radio resources to the UE. The UE sends its UL data; at the Node B the received MAC-es PDUs are mapped on the Iub data transport bearer(s) configured for this UE, transported to the UE's configured MAC-es entity, and reordered in the reordering queues.
One aspect regarding virtual CCCH users is to pre-configure multiple EDCH resources for CCCH reception, with one EDCH resource consisting of one RLC entity, one MAC-es reordering queue and one Iub data transport bearer. If a UE sends CCCH data, then the MAC-e selects one of the unused EDCH resources for CCCH reception. The transport and processing of MAC-e and MAC-es PDUs is then identical to the case where dedicated EDCH resources exist.

To send a CCCH message, following extension may be done at the UE side:
- The segmentation at UM RLC entity for CCCH is configured instead of TM RLC.
- No modification for MAC-es/e

To receive a CCCH message, following mechanisms and extensions may be performed at the UTRAN side:
- Pre-configuration of multiple UM RLC entities, MAC-es entities and Iub transport bearer. In detail: N triples (UM RLC, MAC-es, Iub data transport bearer) for CCCH reception are pre-configured in UTRAN:
   - UM RLC entity for CCCH reception: The UM RLC entity receives RLC PDUs, reassembles them and forwards CCCH messages to the RRC entity.
   - MAC-es entity for CCCH reception: The MAC-es entity for CCCH reception has the same functions defined as in REL6/7. The MAC-es entity provides its services to the higher layer UM RLC entity for CCCH reception, i.e. it forwards RLC PDUs to it.
   - Iub data transport bearer: An AAL2 Binding Identity is used to bind the Iub Data Transport Bearer to E-DCH. The Iub data transport bearer provided MAC-es PDU transport channel to the MAC-es entity for CCCH reception.

The pre-configuration can be implementation specific, for instance establishment, maintenance and release can be left to operation and maintenance.

The NBAP may have to be extended to allow the RNC to notify the Node B/cell about the pre-configured triples (UM RLC, MAC-es, Iub data transport bearer) for CCCH reception.

- MAC-e entity extension:
- UE id and Iub data transport channel demultiplexing:
   When granting EDCH resources to a UE during the HS-RACH procedure, the Node B automatically establishes a MAC-e entity for this UE. If a MAC-e PDU is received, and a field (for instance logical channel id or DDI) in the MAC-e header links the uplink transmission to CCCH, then
   - the Node B selects one of the Iub data transport bearer for CCCH reception from a pool of non-occupied Iub data transport bearer for CCCH reception - the selected Iub data transport bearer is marked as occupied - and then
   - transmits all MAC-es PDUs for the logical channel CCCH on this Iub data transport bearer till the HS-RACH radio resources are released for this UE. After the release of the HS-RACH radio resources, the Iub data transport bearer for CCCH reception is returned to the pool of non-occupied Iub data transport bearer for CCCH reception.

The UE id and Iub data transport channel demultiplexing function may also be advantageous for DCCHs and DTCHs in HS-RACH: for instance in CELL_FACH, a dedicated UE id, MAC-es entity and Iub data transport channel(s) are configured. As soon as the UE identity is available at the MAC-e entity with the first successful reception of a MAC-e PDU, all received MAC-e PDUs must be multiplexed on the dedicated Iub data transport channel(s) for this UE. Therefore, the "UE id and Iub data transport channel demultiplexing" function may be advantageous for HS-RACH.

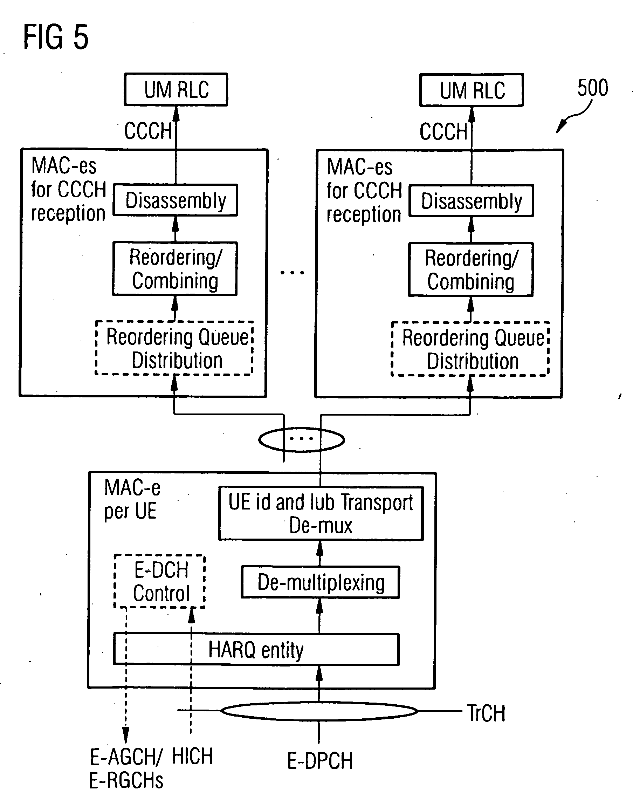

Fig. 5 illustrates a processing scheme 500 in accordance with the second embodiment.

Fig. 5 shows multiple pre-configured Iub data transport bearers, MAC-es and RLC entities for CCCH reception. If the logical channel id for CCCH reception is detected at MAC-e, the Node B selects one of the non-occupied MAC-d flows for MAC-es PDU transport. Each triple (RLC entity, MAC-es entity, Iub data transport bearer) for CCCH reception acts like a "virtually configured" EDCH user (Node B side).

In the following, a procedural description of the second embodiment will be given.

By operation and maintenance, n MAC-es entities for CCCH reception are pre-configured in the RNC for a cell/Node B. Each MAC-es entity for CCCH reception has a reordering and disassembly entity. For each MAC-es entity for CCCH reception there is one Iub transport bearer pre-configured. Each MAC-es entity for CCCH reception is connected with one preconfigured UM RLC entity.

The HS-RACH procedure is started (step 1 to 5 of Fig. 2) as a CCCH message has to be transmitted. The UL transmission of the CCCH message is part of step 6 as described referring to Fig. 2.

UE operation:
1. The UM RLC entity for CCCH transmission segments the RRC SDU into sizes suitable for MAC-es/e, if needed. The segments are forwarded as RLC PDUs to the MAC-es/e entity. The operation in the MAC-es/e side of the UE continues as in REL6/7.

Node B operation:
1. The HS-RACH procedure is started (step 1 to 5 of Fig. 2) as a CCCH message has to be transmitted. The UL transmission of the CCCH message is part of step 6 as described referring to Fig. 2.
2. The first successfully received MAC-es PDU contains a UE identity and logical channel information (for instance in DDI-field, or equivalent field depending on MAC-e header evolution for REL8). After determining the logical channel id, the Node B knows that the UE sends data for the CCCH.
3. The Node B selects one of the Iub transport bearers to a MAC-es entity for CCCH reception, which is currently not used for CCCH data transport. The Node B uses this Iub transport bearer exclusively for this UE for the duration of the HS-RACH procedure. When the HS-RACH procedure ends, and physical resources granted on the radio interface are released, then this Iub transport bearer and its connected MAC-es entity for CCCH reception can be used for another UE requesting transport of CCCH data.
   Neither the Iub transport bearer nor its MAC-es entity for CCCH reception have to be released after releasing the HS-RACH resources for a UE.
   When the HS-RACH procedure ends, the Node B may signal this to the RNC, so that any buffered MAC-es PDU in the MAC-es entity is discarded, and any buffered RLC PDUs in the UM RLC entity are delivered to the higher layer/ or discarded.
4. At the MAC-es for CCCH entity reception reordering/combining and disassembly takes place as in REL6/7.
5. Each MAC-es for CCCH entity is connected to one UM RLC entity which concatenates all received RLC PDUs, before forwarding them to the higher layer.

This mechanism guarantees that only the common data of a single UE are re-ordered in a reordering queue. As a consequence higher data volumes can be transmitted on the CCCH.

According to a third embodiment of the invention, multiple "virtual" CCCH channels may be implemented.

UL data transmission for several configured logical channels may be supported in EDCH and HS-RACH.

An aspect of the third embodiment is to process the CCCH data flow from several users as if coming from a single user with multiple priority flows configured, whereby each priority queue serves one CCCH transmitting UE. One MAC-es entity and one Iub data transport bearer to this entity are preconfigured. Every MAC-es PDU for the CCCH received at the cell/Node B is mapped on this Iub data transport bearer. The reordering queue distribution function in the MAC-es uses the logical channel id (and possible other attributes) included in the prepended MAC-es header to distribute the MAC-es PDUs to their reordering queue. Instead of the logical channel id, a temporary UE id is send in the prepended MAC-es header. The temporary UE id is selected at the MAC-e entity, when a MAC-es PDU for CCCH has been received for the first time and is included to the preprended MAC-es header for all MAC-es PDUs for the CCCH, i.e. one temporary UE id and one reordering queue is used for a UE.

To send a CCCH message, the following extension may be done at the UE side:
- The segmentation at UM RLC entity for CCCH is configured instead of TM RLC
- No modification for MAC-es/e

To receive a CCCH message, following mechanisms and extensions may be performed at the UTRAN side:
- Iub data transport bearer for CCCH reception: One Iub data transport bearer for CCCH reception is configured. On this bearer, only MAC-es PDUs carrying UL CCCH information are transmitted. Each transmitted MAC-es PDU is accompanied by a so called "prepended MAC-es PDU header", which includes a UE identity field: In CELL_DCH state, this field contains the logical channel id, etc. As every MAC-es PDU on this channel is carrying data for the logical channel CCCH, the bits of these field can be used to inform the receiver (MAC-es/RNC) that all MAC-es PDUs with the same id originated from a single UE.
- MAC-e entity extension: UE id and Iub data transport channel demultiplexing: When granting EDCH resources to a UE during the HS-RACH procedure, the Node B automatically establishes a MAC-e entity for this UE. If a MAC-e PDU is received, and a logical channel id in the MAC-e header links the MAC-es PDU in the MAC-e PDU payload part to CCCH, then this function is used to
- select a temporary UE id from a pool of non-used identity values; This value is marked as used, and is used for this UE for the duration of the HS-RACH procedure; and then
- multiplexes all MAC-es PDUs for the logical channel CCCH on the pre-configured Iub data transport bearer for CCCH reception. Hereby the prepended MAC-es header has the temporary UE id included.
- After the release of the HS-RACH radio resources, the temporary UE id is marked as non-used.

The Node B may signal to the RNC that the use of a temporary UE id has ended.
- MAC-es extension in the RNC: There is one MAC-es entity for CCCH reception. The UE id in the prepended MAC-es header is used to route the MAC-es entity to the correct reordering queue, consisting of the reordering/combining and the disassembly function. If a MAC-es PDU header contains a previous unused UE id, then the RNC may create a new reordering queue and a new RLC entity for this UE id. If no MAC-es PDU for an existing reordering queue for a UE id appears for a defined period of time, or if (alternatively) the Node B signals that the UE id for an existing reordering queue is no longer used, then the reordering queue may be released, and any stored MAC-es PDUs are discarded. Also the RLC entity is released.
- UM RLC for CCCH reception: This entity supports the concatenation of RLC PDUs received by a priority queue of a MAC-es entity for CCCH reception.

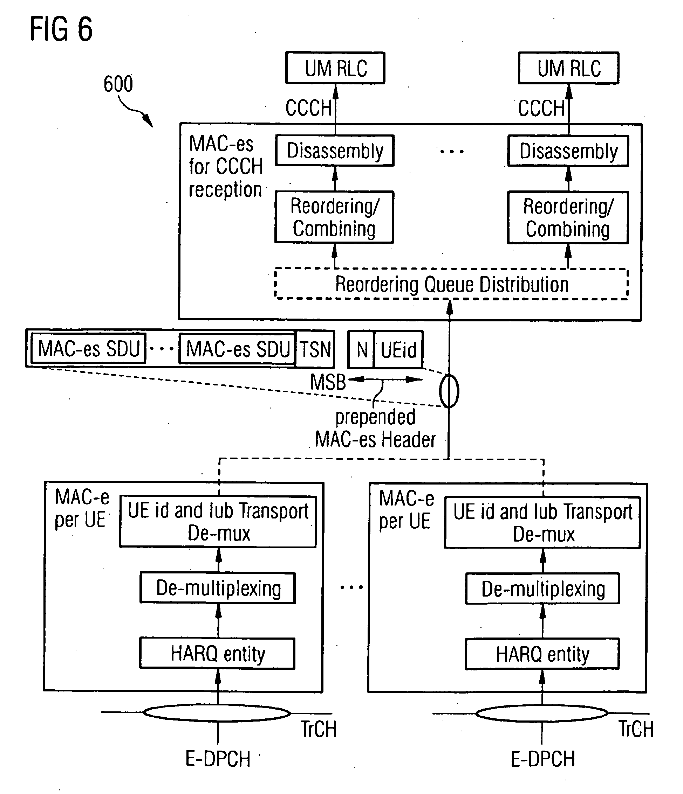

Fig. 6 illustrates a processing scheme 600 in accordance with the third embodiment.

Fig. 6 illustrates a single pre-configured Iub data bearer for CCCH reception. If the logical channel id for CCCH reception is detected at MAC-e, the Node B selects one of the non-used UE id values for MAC-es PDU transport. The MAC-es function reordering queue distribution forwards the MAC-es PDUs to the reordering queue associated with the UE id value, Node B side.

Next, a procedural description in accordance with the third embodiment will be explained.

By operation and maintenance, one MAC-es entity for CCCH reception is pre-configured in the RNC for a cell/Node B. In comprises one or several reordering and disassembly queues. Each queue is connected with one UM RLC entity. One Iub transport bearer pre-configured, which is linked to the MAC-es entity for CCCH reception.

The HS-RACH procedure is started (step 1 to 5 of Fig. 2) as a CCCH message has to be transmitted. The UL transmission of the CCCH message is part of step 6 as described referring to Fig. 2.

UE operation:
1. The UM RLC entity for CCCH transmission segments the RRC SDU into sizes suitable for MAC-es/e, if needed. The segments are forwarded as RLC PDUs to the MAC-es/e entity. The operation in the MAC-es/e side of the UE continues as in REL6/7.
   Node B operation:
2. The first successfully received MAC-es PDU contains a UE identity and logical channel information (for instance in DDI-field, or equivalent field depending on MAC-e header evolution for REL8). After determining the logical channel id, the Node B knows that the UE sends data for the CCCH.
3. The Node B selects one of the "temporary UE ids" for CCCH reception within the set of available "temporary UE ids", which is currently not used by other MAC-e entities in the cell/Node B for CCCH data transport. The Node B uses this temporary UE id exclusively for this UE for the duration of the HS-RACH procedure. Each MAC-es PDU for CCCH received at the MAC-e entity is mapped on the preconfigured Iub data transport channel for CCCH. In the prepended MAC-es header, the temporary UE id is included.
   When the HS-RACH procedure ends, and physical resources granted on the radio interface are released, then this temporary UE id can be used for another UE requesting transport of CCCH data. Neither the Iub transport bearer nor its MAC-es entity for CCCH reception have to be released after releasing the HS-RACH resources for a UE. When the HS-RACH procedure ends, the Node B may signal this to the RNC, so that any buffered MAC-es PDU in the MAC-es entity is discarded, and any buffered RLC PDUs in the UM RLC entity are delivered to the higher layer/ or discarded.
4. At the MAC-es for CCCH entity the reordering queue distribution function is used to distribute the incoming MAC-es PDUs according to their temporary UE id. Then reordering/combining and disassembly takes place as in REL6/7.
   In REL6/7, reordering queue distribution function is based on the DDI value. No modification of the reordering queue distribution function is performed, if for instance the temporary UE id is placed in the DDI field.
5. Each reordering and disassembly queue is connected to one UM RLC entity which concatenates all received RLC PDUs, before forwarding them to the higher layer.

This mechanism guarantees that only the common data of a single UE are re-ordered in a reordering queue. As a consequence higher data volumes can be transmitted on the CCCH.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs and abbreviations:

- 100: radio network
- 101: communication station
- 102: mobile communication terminal
- 103: mobile communication terminal
- 104: mobile communication terminal
- 105: operating distance
- 106: communication path
- 107: communication path
- 108: terminal communication unit
- 109: user interface
- 110: communication message generation unit
- 114: station communication unit
- 116: communication message evaluation unit
- 120: communicative coupling
- 200: communication scheme
- 210: downlink portion
- 220: uplink portion
- 230: high speed preamble
- 300: processing scheme
- 400: processing scheme
- 500: processing scheme
- 600: processing scheme
- AC: Access Class
- ACK: acknowledged
- AI: Acquisition Indicator
- AICH: Acquisition indicator channel
- ASC: Access Service Class
- CCCH: Common Control Channel
- CQI: Channel Quality Indicator
- DDI: Data Description Indicator
- DPCCH: Dedicated Physical Control Channel
- DPDCH: Dedicated Physical Data Channel
- DL: downlink
- E-DCH: Enhanced Dedicated Channel
- E-DPCCH: Enhanced Dedicated Physical Control Channel
- E-DPDCH: Enhanced Dedicated Physical Data Channel
- E-HICK: Enhanced Hybrid Automatic Request Indication Channel
- F-DPCCH: Fractional Dedicated Physical Control Channel
- MAC: Medium Access Control
- MAC-e: Medium Access Control entity for EDCH in Node B
- MAC-es: Medium Access Control entity for EDCH in RNC
- MAC-es/e: Medium Access Control entity for EDCH in UE
- NACK: non-acknowledged
- HS-RACH: High Speed Random Access Channel
- HS-SCCH: High Speed - Shared Control Channel
- HSDPA: High Speed Downlink Packet Access
- HSUPA: High Speed Uplink Packet Access
- PDU: Protocol Data Unit
- PRACH: Physical Random Access Channel
- RACH: Random Access Channel
- RLC: Radio Link Control
- RRC: Radio Resource Control
- SI: Scheduling Information
- SDU: Service Data Unit
- TSN: Transmission Sequence Number
- TTI: Transmission Time Interval
- UE: User Equipment
- UL: uplink
- URA: UTRAN Registration Area
- WCDMA: Wideband Code Division Multiple Access

## Claims

1. A mobile communication terminal (102) adapted to be communicatively coupled to a communication station (101) of a communication network (100), the mobile communication terminal (102) comprising:
a station communication unit (108) adapted for exchanging communication messages with the communication station (101);
a communication message generation unit (110) adapted for generating a Common Control Channel information comprising message for transmission to the communication station (101) by the station communication unit (108);
**characterised by** the communication message generation unit (110) being adapted for rearranging the Common Control Channel information comprising message in a plurality of Transmission Time Intervals in accordance with a property of the Common Control Channel information comprising message before transmission to the communication station (101).

2. The mobile communication terminal (102) according to claim 1,
wherein the communication message generation unit (110) is adapted for rearranging the Common Control Channel information comprising message in accordance with a size of the Common Control Channel information comprising message.

3. The mobile communication terminal (102) according to claim 1 or 2,
wherein the communication message generation unit (110) is adapted for rearranging the Common Control Channel information comprising message in accordance with a granted uplink resource per Transmission Time Interval.

4. The mobile communication terminal (102) according to any one of claims 1 to 3,
wherein the communication message generation unit (110) is adapted for rearranging the Common Control Channel information comprising message in at least one manner of the group consisting of segmenting the Common Control Channel information comprising message, and restructuring the Common Control Channel information comprising message.

5. The mobile communication terminal (102) according to any one of claims 1 to 4,
wherein the Common Control Channel information comprising message is one of the group consisting of a Common Control Channel message, and a Radio Link Control Protocol Data Unit.

6. The mobile communication terminal (102) according to claim 5,
wherein the Common Control Channel message is one of the group consisting of a Radio Resource Control Connection Request message, a Cell Update message, and a Universal Mobile Telecommunications System Terrestrial Radio Access Network Registration Area Update message.

7. The mobile communication terminal (102) according to any one of claims 1 to 8,
comprising a Medium Access Control entity adapted for transporting the Common Control Channel information comprising message.

8. The mobile communication terminal (102) according to any one of claims 1 to 7,
adapted as a user equipment, particularly as a mobile phone.

9. The mobile communication terminal (102) according to any one of claims 1 to 8,
adapted for a communication in accordance with a Universal Mobile Telecommunications System protocol, particularly in accordance with a Universal Mobile Telecommunications System Terrestrial Radio Access Network protocol.

10. A communication station (101) adapted to be communicatively coupled to a mobile communication terminal (102) of a communication network (100), the communication station (101) comprising:
a terminal communication unit (114) adapted for exchanging communication messages with the mobile communication terminal (102);
**characterised by** a communication message evaluation unit (116) adapted for evaluating a Common Control Channel information comprising message received from the mobile communication terminal (102) and being rearranged in a plurality of Transmission Time Intervals in accordance with a property of the Common Control Channel information comprising message.

11. The communication station (101) according to claim 10, wherein the communication message evaluation unit (116) is adapted for evaluating the received Common Control Channel information comprising message in at least one manner of the group consisting of restructuring content of the received Common Control Channel information comprising message, combining content of the received Common Control Channel information comprising message, disassembling content of the received Common Control Channel information comprising message, and reassembling content of the received Common Control Channel information comprising message.

12. The communication station (101) according to claim 10 or claim 11,
wherein the Common Control Channel information comprising message is one of the group consisting of a Common Control Channel message, and a Radio Link Control Protocol Data Unit.

13. The communication station (101) according to claim 12, wherein the Common Control Channel message is one of the group consisting of a Radio Resource Control Connection Request message, a Cell Update message, and a Universal Mobile Telecommunications System Terrestrial Radio Access Network Registration Area Update message.

14. The communication station (101) according to any one of claims 10 to 13,
comprising a Medium Access Control entity for transporting the Common Control Channel information comprising message.

15. The communication station (101) according to any one of claims 10 to 14,
comprising a plurality of preconfigured Medium Access Control entities for transporting the Common Control Channel information comprising message.

16. The communication station (101) according to any one of claims 10 to 15,
comprising a management unit adapted for queuing and subsequently working off a plurality of Common Control Channel information comprising messages received from a plurality of mobile communication terminals (102).

17. The communication station (101) according to any one of claims 10 to 16,
adapted for a communication in accordance with a Universal Mobile Telecommunications System protocol, particularly in accordance with a Universal Mobile Telecommunications System Terrestrial Radio Access Network protocol.

18. A communication network (100), the communication network (100) comprising
a mobile communication terminal (102) according to any one of claims 1 to 9;
a communication station (101) according to any one of claims 10 to 17;
wherein the mobile communication terminal (102) is communicatively coupled to the communication station (101).

19. A method of communicating in a communication network (100), the method comprising
communicatively coupling a mobile communication terminal (102) to a communication station (101);
generating, by the mobile communication terminal (102), a Common Control Channel information comprising message for transmission to the communication station (101);
**characterised by** rearranging, by the mobile communication terminal (102), the Common Control Channel information comprising message in a plurality of Transmission Time Intervals in accordance with a property of the Common Control Channel information comprising message before transmission to the communication station (101);
evaluating, by the communication station (101), the rearranged Common Control Channel information comprising message received from the mobile communication terminal (102).

## Patentansprüche

1. Mobilkommunikationsendgerät (102), das dafür ausgelegt ist, kommunikativ mit einer Kommunikationsstation (101) eines Kommunikationsnetzes (100) gekoppelt zu werden, wobei das Mobilkommunikationsendgerät (102) Folgendes umfasst:
eine Stationskommunikationseinheit (108), die dafür ausgelegt ist, Kommunikationsnachrichten mit der Kommunikationsstation (101) auszutauschen;
eine Kommunikationsnachrichten-Erzeugungseinheit (110), die dafür ausgelegt ist, eine Informationen des Common Control Channel umfassende Nachricht zur Übertragung zu der Kommunikationsstation (101) durch die Stationskommunikationseinheit (108) zu erzeugen;
**dadurch gekennzeichnet, dass** die Kommunikationsnachrichten-Erzeugungseinheit (110) dafür ausgelegt ist, die Informationen des Common Control Channel umfassende Nachricht gemäß einer Eigenschaft der Informationen des Common Control Channel umfassenden Nachricht vor der Übertragung zu der Kommunikationsstation (101) in mehreren Transmission Time Intervals umzuordnen.

2. Mobilkommunikationsendgerät (102) nach Anspruch 1, wobei die Kommunikationsnachrichten-Erzeugungseinheit (110) dafür ausgelegt ist, die Informationen des Common Control Channel umfassende Nachricht gemäß einer Größe der Informationen des Common Control Channel umfassenden Nachricht umzuordnen.

3. Mobilkommunikationsendgerät (102) nach Anspruch 1 oder 2, wobei die Kommunikationsnachrichten-Erzeugungseinheit (110) dafür ausgelegt ist, die Informationen des Common Control Channel umfassende Nachricht gemäß einem gewährten Uplink-Betriebsmittel pro Transmission Time Interval umzuordnen.

4. Mobilkommunikationsendgerät (102) nach einem der Ansprüche 1 bis 3,
wobei die Kommunikationsnachrichten-Erzeugungseinheit (110) dafür ausgelegt ist, die Informationen des Common Control Channel umfassende Nachricht auf mindestens eine Weise der Gruppe bestehend aus Segmentieren der Informationen des Common Control Channel umfassenden Nachricht und Umstrukturieren der Informationen des Common Control Channel umfassenden Nachricht umzuordnen.

5. Mobilkommunikationsendgerät (102) nach einen der Ansprüche 1 bis 4,
wobei es sich bei der Informationen des Common Control Channel umfassenden Nachricht um eines der Gruppe bestehend aus einer Nachricht des Common Control Channel und einer Radio Link Control Protocol Data Unit handelt.

6. Mobilkommunikationsendgerät (102) nach Anspruch 5,
wobei die Nachricht des Common Control Channel eine der Gruppe bestehend aus einer Nachricht Radio Resource Control Connection Request, einer Nachricht Cell Update und einer Nachricht Universal Mobile Telecommunications System Terrestrial Radio Access Network Registration Area Update ist.

7. Mobilkommunikationsendgerät (102) nach einem der Ansprüche 1 bis 8,
das eine Entität der Medium Access Control umfasst, die dafür ausgelegt ist, die Informationen des Common Control Channel umfassende Nachricht zu transportieren.

8. Mobilkommunikationsendgerät (102) nach einem der Ansprüche 1 bis 7,
das als ein Benutzergerät, insbesondere ein Mobiltelefon, ausgelegt ist.

9. Mobilkommunikationsendgerät (102) nach einem der Ansprüche 1 bis 8,
das für eine Kommunikation gemäß einem Protokoll des Universal Mobile Telecommunications System, insbesondere gemäß einem Protokoll des Universal Mobile Telecommunications System Terrestrial Radio Access Network ausgelegt ist.

10. Kommunikationsstation (101), die dafür ausgelegt ist, kommunikativ mit einem Mobilkommunikationsendgerät (102) eines Kommunikationsnetzes (100) gekoppelt zu werden, wobei die Kommunikationsstation (101) Folgendes umfasst:
eine Endgerätekommunikationseinheit (114), die dafür ausgelegt ist, Kommunikationsnachrichten mit dem Mobilkommunikationsendgerät (102) auszutauschen;
**gekennzeichnet durch** eine Kommunikationsnachrichten-Auswertungseinheit (116), die dafür ausgelegt ist, eine Informationen des Common Control Channel umfassende Nachricht auszuwerten, die von dem Mobilkommunikationsendgerät (102) empfangen und gemäß einer Eigenschaft der Informationen des Common Control Channel umfassenden Nachricht in mehreren Transmission Time Intervals umgeordnet wird.

11. Kommunikationsstation (101) nach Anspruch 10, wobei die Kommunikationsnachrichten-Auswertungseinheit (116) dafür ausgelegt ist, die empfangene Informationen des Common Control Channel umfassende Nachricht auf mindestens eine Weise der Gruppe bestehend aus Umstrukturieren von Inhalt der empfangenen Informationen des Common Control Channel umfassenden Nachricht, Kombinieren von Inhalt der empfangenen Informationen des Common Control Channel umfassenden Nachricht, Deassemblieren von Inhalt der empfangenen Informationen des Common Control Channel umfassenden Nachricht und Reassemblieren von Inhalt der empfangenen Informationen des Common Control Channel umfassenden Nachricht auszuwerten.

12. Kommunikationsstation (101) nach Anspruch 10 oder Anspruch 11,
wobei es sich bei der Informationen des Common Control Channel umfassenden Nachricht um eines der Gruppe bestehend aus einer Nachricht des Common Control Channel und einer Radio Link Control Protocol Data Unit handelt.

13. Kommunikationsstation (101) nach Anspruch 12,
wobei die Nachricht des Common Control Channel eine der Gruppe bestehend aus einer Nachricht Radio Resource Control Connection Request, einer Nachricht Cell Update und einer Nachricht Universal Mobile Telecommunications System Terrestrial Radio Access Network Registration Area Update ist.

14. Kommunikationsstation (101) nach einem der Ansprüche 10 bis 13,
die eine Entität der Medium Access Control zum Transportieren der Informationen des Common Control Channel umfassenden Nachricht umfasst.

15. Kommunikationsstation (101) nach einem der Ansprüche 10 bis 14,
die mehrere vorkonfigurierte Entitäten der Medium Access Control zum Transportieren der Informationen des Common Control Channel umfassenden Nachricht umfasst.

16. Kommunikationsstation (101) nach einem der Ansprüche 10 bis 15,
die eine Verwaltungseinheit umfasst, die dafür ausgelegt ist, mehrere Informationen des Common Control Channel umfassende Nachrichten, die von mehreren Mobilkommunikationsendgeräten (102) empfangen werden, in Warteschlangen einzureihen und danach abzuarbeiten.

17. Kommunikationsstation (101) nach einem der Ansprüche 10 bis 16,
die für Kommunikation gemäß einem Protokoll des Universal Mobile Telecommunications System, insbesondere gemäß einem Protokoll des Universal Mobile Telecommunications System Terrestrial Radio Access Network ausgelegt ist.

18. Kommunikationsnetz (100), wobei das Kommunikationsnetz (100) Folgendes umfasst:
ein Mobilkommunikationsendgerät (102) nach einem der Ansprüche 1 bis 9;
eine Kommunikationsstation (101) nach einem der Ansprüche 10 bis 17;
wobei das Mobilkommunikationsendgerät (102) kommunikativ mit der Kommunikationsstation (101) gekoppelt ist.

19. Verfahren zum Kommunizieren in einem Kommunikationsnetz (100), mit den folgenden Schritten:
Kommunikatives Koppeln eines Mobilkommunikationsendgeräts (102) mit einer Kommunikationsstation (101);
Erzeugen einer Informationen des Common Control Channel umfassenden Nachricht durch das Mobilkommunikationsendgerät (102) zur Übertragung zu der Kommunikationsstation (101);
**gekennzeichnet durch** Umordnen der Informationen des Common Control Channel umfassenden Nachricht **durch** das Mobilkommunikationsendgerät (102) in mehreren Transmission Time Intervals gemäß einer Eigenschaft der Informationen des Common Control Channel umfassenden Nachricht vor der Übertragung zu der Kommunikationsstation (101);
Auswerten der von dem Mobilkommunikationsendgerät (102) empfangenen umgeordneten Informationen des Common Control Channel umfassenden Nachricht **durch** die Kommunikationsstation (101).

## Revendications

1. Terminal (102) de communication mobile conçu pour être couplé en communication à une station (101) de communication d'un réseau (100) de communication, le terminal (102) de communication mobile comprenant :
une unité (108) de communication de station conçue pour échanger des messages de communication avec la station (101) de communication ;
une unité (110) de production de messages de communication conçue pour produire un message comprenant une information de canal central de commande, pour une transmission à la station (101) de communication par l'unité (108) de communication de station ;
**caractérisé en ce que** l'unité (110) de production de messages de communication est conçue pour réarranger le message comprenant une information de canal central de commande en une pluralité d'intervalles de temps de transmission en fonction d'une propriété du message comprenant une information du canal central de commande avant transmission à la station (101) de communication.

2. Terminal (102) de communication mobile suivant la revendication 1,
dans lequel l'unité (110) de production de messages de communication est conçue pour réarranger le message comprenant une information de canal central de commande en fonction d'une dimension du message comprenant une information de canal central de commande.

3. Terminal (102) de communication mobile suivant la revendication 1 ou 2,
dans lequel l'unité (110) de production de messages de communication est conçue pour réarranger le message comprenant une information de canal central de commande en fonction d'une ressource accordée en liaison montante par intervalle de temps de transmission.

4. Terminal (102) de communication mobile suivant l'une quelconque des revendications 1 à 3,
dans lequel l'unité (110) de production de messages de communication est conçue pour réarranger le message comprenant une information de canal central de commande en au moins une manière du groupe consistant à segmenter le message comprenant une information de canal central de commande et à restructurer le message comprenant une information de canal central de commande.

5. Terminal (102) de communication mobile suivant l'une quelconque des revendications 1 à 4,
dans lequel le message comprenant une information de canal central de commande est l'un du groupe consistant en un message de canal central de commande et en une unité de données de protocole de commande de liaison radio.

6. Terminal (102) de communication mobile suivant la revendication 5,
dans lequel le message de canal central de commande est l'un du groupe consistant en un message de demande de connexion de commande de ressource radio, en un message de remise à jour de cellule et en un message de remise à jour de zone d'enregistrement de réseau à accès radio terrestre de système de télécommunications mobile universel.

7. Terminal (102) de communication mobile suivant l'une quelconque des revendications 1 à 8,
comprenant une entité de commande d'accès à un support conçue pour transporter le message comprenant une information de canal central de commande.

8. Terminal (102) de communication mobile suivant l'une quelconque des revendications 1 à 7,
conçu en tant qu'équipement de l'utilisateur, en particulier sous la forme d'un téléphone mobile.

9. Terminal (102) de communication mobile suivant l'une quelconque des revendications 1 à 8,
conçu pour une communication suivant un protocole de système de télécommunications mobile universel, en particulier suivant un protocole de réseau à accès radio terrestre de système de télécommunications mobile universel.

10. Station (101) de communication conçue pour être couplée en communication à un terminal (102) de communication mobile d'un réseau (100) de communication, la station (101) de communication comprenant :
une unité (114) de communication de terminal conçue pour échanger des messages de communication avec le terminal (102) de communication mobile ;
**caractérisée par** une unité (116) d'évaluation de message de communication conçue pour évaluer un message comprenant une information de canal central de commande reçu du terminal (102) de communication mobile et pour le réarranger en une pluralité d'intervalles de temps de transmission en fonction d'une propriété du message comprenant une information de canal central de commande.

11. Station (101) de communication suivant la revendication 10, dans lequel l'unité (116) d'évaluation de message de communication est conçue pour évaluer le message comprenant une information de canal central de commande reçu suivant au moins une manière du groupe consistant à restructurer le contenu du message comprenant une information de canal central de commande reçu, à combiner le contenu du message comprenant une information de canal central de commande reçu, à désassembler le contenu du message comprenant une information de canal central de commande reçu et à réassembler le contenu du message comprenant une information de canal central de commande reçu.

12. Station (101) de communication suivant la revendication 10 ou revendication 11,
dans lequel le message comprenant une information de canal central de commande est l'un du groupe comprenant un message de canal central de commande et une unité de données de protocole de commande à liaison radio.

13. Station (101) de communication suivant la revendication 12, dans lequel le message de canal central de commande est l'un du groupe consistant en un message de canal central de commande et en une unité de données de protocole de commande de liaison radio.

14. Station (101) de communication suivant l'une quelconque des revendications 10 à 13,
comprenant une entité de commande d'accès à un support conçue pour transporter le message comprenant une information de canal central de commande.

15. Station (101) de communication suivant l'une quelconque des revendications 10 à 14,
comprenant une pluralité d'entités préconfigurées de commande d'accès à un support pour transporter le message comprenant une information de canal central de commande.

16. Station (101) de communication suivant l'une quelconque des revendications 10 à 15,
comprenant une unité de gestion conçue pour prendre une file d'attente et ensuite traiter une pluralité de messages comprenant une information de canal central de commande reçus d'une pluralité de terminaux (102) de communication mobile.

17. Station (101) de communication suivant l'une quelconque des revendications 10 à 16,
conçue pour une communication suivant un protocole de système de télécommunications mobile universel, en particulier suivant un protocole de réseau à accès radio terrestre de système de télécommunications mobile universel.

18. Réseau (100) de communication, le réseau (100) de communication comprenant
un terminal (102) de communication mobile suivant l'une quelconque des revendications 1 à 9 ;
une station (101) de communication suivant l'une quelconque des revendications 10 à 17 ;
le terminal (102) de communication mobile étant couplé en communication à la station (101) de communication.

19. Procédé de communication dans un réseau (100) de communication, procédé dans lequel
on couple en communication un terminal (102) de communication mobile à une station (101) de communication ;
on produit par le terminal (102) de communication mobile un message comprenant une information de canal central de commande pour transmission à la station (101) de communication ;
**caractérisé en ce que** l'on réarrange par le terminal (102) de communication mobile le message comprenant une information de canal central de commande en une pluralité d'intervalles de temps de transmission en fonction d'une propriété du message comprenant une information de canal central de commande avant transmission à la station (101) de communication ;
on évalue, par la station (101) de communication, le message comprenant une information de canal central de commande réarrangé reçu du terminal (102) de communication mobile.
